# NEUE EUROPÄISCHE PATENTSCHRIFT

(11) **EP 0 597 365 B2**
(45) Veröffentlichungstag und Bekanntmachung des Hinweises auf die Entscheidung über den Einspruch: **17.03.2004**
(45) Hinweis auf die Patenterteilung: 23.07.1997
(21) Anmeldenummer: 93117764.6
(22) Anmeldetag: 03.11.1993
(51) Int. Cl.: F04B 37/14, F04D 19/04, F04B 37/02, H02K 7/14, H02K 11/00

(54) **Vakuumpumpe mit Wandler**
Vacuumpump with converter
Pompe à vide avec convertisseur

(30) Priorität: 11.11.1992 DE 4237971
(43) Veröffentlichungstag der Anmeldung: 18.05.1994
(73) Patentinhaber: Balzers und Leybold Deutschland Holding Aktiengesellschaft, 63450 Hanau (DE)
(72) Erfinder: Schoroth, Anno, D-53639 Königswinter (DE)
(74) Vertreter: Leineweber, Jürgen, Dipl.-Phys.

(56) Entgegenhaltungen:
- EP-A- 0 028 206
- EP-A- 0 159 464
- EP-A- 0 337 530
- EP-A- 0 419 984
- EP-A- 0 464 571
- FR-A- 2 534 980
- GB-A- 2 129 068
- GB-A- 2 143 668
- GB-A- 2 146 073
- GB-A- 2 194 987
- GB-A- 2 220 800
- US-A- 3 776 666
- US-A- 4 460 317
- US-A- 4 726 746
- US-A- 4 773 829
- US-A- 4 958 096
- US-A- 4 998 865
- US-A- 5 004 942
- US-A- 5 006 743
- US-A- 5 079 464
- US-A- 5 092 748
- US-A- 5 096 390
- US-A- 5 120 201
- US-A- 5 127 148
- US-A- 5 156 535
- Wearden, T.: Whatever is happening to pressure transducers, in: Transducers Technology, Oct. 1986, pp. 12-13, 15
- Arrillaga, J.: High Voltage Direct Current Transmission, in: IEE Power Engineering Series 6, Peregrinus Ltd. London, 1983
- Padiyar, K.R.: HVDC Power Transmission Systems, John Wiley & Sons, Inc., New York, 1990, pp. 1-7
- Ultrahigh Vacuum Equipment Catalog 1989/1990, IONPAK 200, Leybold-Heraeus 1978
- Design, Operating Principle and Performance of TURBOVAC Turbomolecular Pumps and Titanium Sublimation Pumps, Leybold-Heraeus 1975, pp. 5-22, 35

## Beschreibung

Die Erfindung bezieht sich auf eine Turbovakuumpumpe oder Molekularvakuumpumpe mit den Merkmalen des Oberbegriffs des Patentanspruchs 1.

Eine Vakuumpumpe mit einem Wandler ist aus der EP-A-464 571 bekannt. Pumpe und Wandler sind Ober ein mehradriges Kabel miteinander verbunden. Über das Kabel muß zum einen die im Wandler an den Verbraucher in der Pumpe angepaßte Leistung - sei es ein hochfrequenter Wechselstrom oder eine Hochspannung - übertragen werden. Zum anderen dient das Kabel der Übertragung von Bedienungs-, Anzeige-, Steuerungs- und/oder Überwachungssignalen.

Der Wandler mit seinem Leistungsteil und seinem Steuerteil, ggf. auch mit Bedienungs- und Anzeigeelementen, wird dort aufgestellt, wo die Bedienung der Pumpe erfolgt. Häufig liegen der Bedienungsort und der Einsatzort der Pumpe voneinander entfernt. Die Kabelverbindung zwischen dem Wandler und der Vakuumpumpe kann jedoch nicht beliebig lang sein, da sowohl die Leistungsverluste auf den Leitungen als auch Funktionsbeeinträchtigungen durch elektromagnetische Störungen mit der Leitungslänge zunehmen.

Die US-A-44 60 317 offenbart eine lonengetterpumpe, bei der das der Erzeugung der Hochspannung dienende Leistungsteil im Gehäuse der Pumpe untergebracht ist. Ein im Gehäuse der lonengetterpumpe untergebrachtes Steuerteil ist nicht vorhanden. Es wird zwar die Messung eines "leakage current" beschrieben; hierbei handelt es sich jedoch um die Messung von Kriechströmen, die nach längerem Betrieb der Ionengetterpumpe im Bereich des Spaltes 46 infolge von Niederschlägen auftreten. Die Messung erfolgt in gleicher Weise und mit dem gleichen Gerät wie die Messung des Betriebsstromes; unterschiedlich ist nur, daß während der Leckstrommessung Magnete und zugehörige Joche entfernt werden.

Der vorliegenden Erfindung liegt die Aufgabe zugrunde, die erwähnten Leistungsverluste und Funktionsbeeinträchtigungen bei einer Vakuumpumpe der eingangs erwähnten Art zu vermeiden.

Erfindungsgemäß wird diese Aufgabe durch die kennzeichnenden Merkmale der Patentansprüche gelöst. Der Vorteil dieser Maßnahme liegt zunächst darin, daß eine lange Leitung zwischen Leistungsteil und Antriebsmotor nicht mehr erforderlich ist, selbst wenn die Bedienungs- und Anzeigeelemente weit vom Einsatzort der Pumpe entfernt liegen. Auch die Verbindungsleitungen zwischen den zu überwachenden Stellen der Vakuumpumpe und dem Steuerteil sind extrem kurz. Ein separates Gehäuse für die elektrische Versorung entfällt. Weitere Vorteile bestehen in dem geringen Volumen des G esamtsystems und - wegen des Wegfalls von Kabeln und Steckverbindungen - in der höheren Zuverlässigkeit.

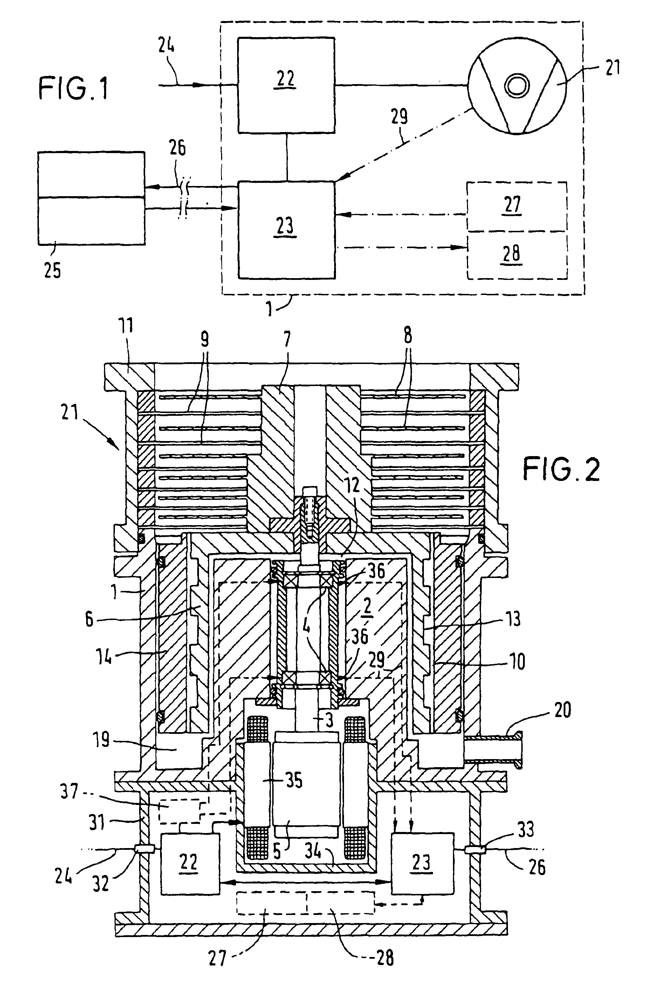

Weitere Vorteile und Einzelheiten der Erfindung sollen an hand von in den Figuren 1 und 2 schematisch dargestellten Ausführungsbeispielen erläutert werden. Es zeigen:
- Figur 1:: Ein Symbol-Blockschaltbild und
- Figur 2:: einen Schnitt durch eine kombinierte Turbomolekular-/Molekularpumpe.

Beim Ausführungsbeispiel nach Figur 1 ist die Vakuumpumpe mit 21 bezeichnet. Es ist das Symbol für eine Turbomolekularvakuumpumpe dargestellt. Durch die äußere gestrichelte Linie soll das Gehäuse 1 der Vakuumpumpe 21 angedeutet werden.

Innerhalb des Gehäuses 1 befinden sich neben der Vakuumpumpe 21 (mit ihrem in Figur 1 nicht dargestellten Antriebsmotor) ein Leistungsteil 22 und ein Steuerteil 23. Im Leistungsteil 22 befinden sich die elektrischen und elektronischen Bauteile zur Erzeugung des vom Antriebsmotor der Vakuumpumpe 21 benötigten Stromes. Die Spannungsversorgung des Leistungsteiles 22 erfolgt von außen über das Kabel 24. Je nach der gegebenen Situation verbindet das Kabel 24 den Leistungsteil 22 mit dem 220 V-Wechselspannungsnetz oder mit einer 24 V-Industriestandardspannung-Versorgung.

Die elektrische Versorgung des Steuerteiles 23, in dem sich ein Mikroprozessor befindet, erfolgt ebenfalls mit Hilfe des Leistungsteiles 22. Der Steuerteil 23 steht mit einem Bedienungs- und Anzeigegerät 25 in Verbindung. Dieses befindet sich außerhalb des Pumpengehäuses 1 und benötigt deshalb ein Verbindungskabel 26. Bedienungs- und Anzeigeelemente 27, 28 können aber auch innerhalb des Pumpengehäuses 1 untergebracht sein. Die Elemente 27, 28 können entweder das außerhalb des Pumpengehäuses befindliche Bedienungs- und Anzeigegerät 25 ersetzen. Bei dieser Lösung entfällt das Kabel 26. Bedienungselemente 27 und Statusanzeigen 28 können aber auch zusätzlich zum externen Bedienungs- und Anzeigegerät 25 innerhalb des Pumpengehäuses 1 untergebracht sein.

Der Steuerteil 23 ist mit Baugruppen ausgerüstet, die eine Überwachung von Betriebsparametern der Vakuumpumpe 21 ermöglichen. Diese Lösung setzt die Existenz von Sensoren im Bereich der Vakuumpumpe 21 und/oder des Antriebsmotors sowie die Verbindung dieser Sensoren mit dem Steuerteil 23-angedeutet durch die strichpunktierte Linie 29 - voraus. In Abhängigkeit der von den Sensoren gelieferten Signale wird mit Hilfe des Steuerteiles 23 der Leistungsteil 22 gesteuert.

Figur 2 zeigt einen stark schematisierten Schnitt durch eine kombinierte Turbomolekular-/Molekularpumpe. Das Gehäuse 1 ist mit einer zentralen, nach innen hineinragenden Lagerbuchse 2 ausgerüstet, in der sich eine Welle 3 über eine Lagerung 4 abstützt. Mit der Welle 3 gekoppelt sind der Antriebsmotor 5, der Rotor 6 der Molekularpumpenstufe und der Rotor 7 der Turbomolekularpumpenstufe.

Der Rotor 7 ist mit den Rotorschaufeln 8 ausgerüstet, die gemeinsam mit dem im Gehäuse 1 befindlichen Statorschaufeln 9 die Turbomolekularpumpenstufe bilden. Über den Flansch 11 wird die Pumpe an den zu evakuierenden Rezipienten angeschlossen.

Die Molekularpumpenstufe umfaßt den den Lagerraum 12 übergreifenden, glockenförmigen Rotor 6, der auf seiner Außenseite mit gewindeähnlichen Nuten 13 ausgerüstet ist. In diesen Nuten findet während des Betriebs der Pumpe die Gasförderung von der Hochvakuumseite zur Vorvakuumseite statt. Im übrigen befindet sich zwischen dem Rotor 6 und dem Stator 14 der Spalt 10, der aus Gründen der Vermeidung einer unerwünschten Rückströmung möglichst klein sein soll. Die durch die Pumpe 21 geförderten Gase gelangen in den Vorvakuumraum 19. An diesen schließt sich ein Stutzen 20 an, der während des Betriebs der Vakuumpumpe 21 mit einer Vorvakuumpumpe in Verbindung steht.

Bestandteil des Gehäuses 1 der Vakuumpumpe 21 ist ein abnehmbarer Gehäuseabschnitt 31. In diesem Gehäuseabschnitt befinden sich der Leistungsteil 22 und der Steuerteil 23. Über Durchführungen 32, 33 sind die Verbindungsleitungen 24, 26 aus dem Gehäuseabschnitt 31 herausgeführt.

Bestandteil des abnehmbaren Gehäuseabschnittes 31 ist ein zentraler Träger 34 für den Stator 35 des Elektromotors. Diese Lösung ermöglicht die Trennung der elektrisch und elektronisch zu versorgenden Bauteile von der Pumpe selbst, wodurch Wartungs- und Reparaturarbeiten vereinfacht werden.

Als Beispiel für mit dem Steuerteil 23 über Leitungen 29 in Verbindung stehende Sensoren sind Temperatursensoren 36 dargestellt, die sich im Bereich der Lager 4 befinden. Dadurch besteht die Möglichkeit, Lagerschäden, die sich durch Temperaturerhöhungen bemerkbar machen, frühzeitig festzustellen.

Durch gestrichelte Linien angedeutet sind auch im Pumpengehäuse 1 befindliche Bauteile für Bedienungszwecke (27) und Statusanzeigen (28). Diese Blöcke sind - wie auch in Figur 1 - gestrichelt dargestellt, um anzudeuten, daß sie nicht zwingend im Gehäuse 1 der Vakuumpumpe 21 untergebracht sein müssen.

Für den Fall, daß es sich bei der Lagerung 4 um eine aktive Magnetlagerung handelt, ist es erforderlich, diese mit Strom zu versorgen. Ein Versorgungsteil 37 für derartige Magnetlager ist ebenfalls im Gehäuseabschnitt 31 untergebracht und steht mit dem Leistungsteil 22 in Verbindung. Die Stromversorgung der Magnetlagerung erfolgt in Abhängigkeit von nicht dargestellten Positionssensoren.

## Patentansprüche

1. Turbovakuumpumpe oder Molekularvakuumpumpe (21)
- mit einem Gehäuse (1),
- mit einem mit hoher Drehzahl betriebenen Rotor (7),
- mit einem Antriebsmotor (5) für den Rotor (7),
- mit einem Leistungsteil (22), in dem sich elektrische und elektronische Bauteile zur Erzeugung des vom Antriebsmotor (5) benötigten Stromes befinden,
- mit einem Steuerteil (23) mit Baugruppen zur Überwachung und Steuerung von Betriebsparametern der Pumpe,
- mit einem Mikroprozessor, der sich im Steuerteil (23) befindet,
- mit Sensoren (36) im Bereich der Vakuumpumpe (21) und/oder des Antriebsmotors (5), welche über Signalleitungen (29) mit dem Steuerteil (23) in Verbindung stehen, und
- mit einer Verbindung zwischen Leistungsteil (22) und Steuerteil (23), über die das Leistungsteil (22) und damit Betriebsparameter der Vakuumpumpe (21) in Abhängigkeit von Signalen der Sensoren (36) gesteuert werden,
**dadurch gekennzeichnet,**
- **daß** Leistungsteil (22) und Steuerteil (23) im Gehäuse (1) der Vakuumpumpe untergebracht sind und
- **daß** der Leistungsteil (22) so ausgebildet ist, daß Leistungsteil (22) ünd dadurch die Vakuumpumpe zwecks Spannungsversorgung lediglich über ein Kabel (24) mit einem 220 V-Wechselspannungsnetz oder eine 24 V-Industriestandardspannungsversorgung verbindbar ist.

2. Pumpe nach Anspruch 1, **dadurch gekennzeichnet**daß ein von der Pumpe unabhängiges Bedienungs- und Anzeigegerät (25) über eine Leitung (26) mit dem Gehäuse (1) der Vakuumpumpe (21) in Verbindung steht.

3. Pumpe nach Anspruch 1 oder 2 **dadurch gekennzeichnet, daß** Bedienungselemente (27) und Statusanzeigen (28) im Gehäuse (1) der Pumpe untergebracht sind.

4. Pumpe nach einem der vorhergehenden Ansprüche, **dadurch gekennzeichnet, daß** Bestandteil des Gehäuses (1) der Vakuumpumpe (21) ein abnehmbarer Gehäuseabschnitt (31) ist und daß in diesem Gehäuseabschnitt Leistungsteil (22) und Steuerteil (23) untergebracht sind.

5. Pumpe nach Anspruch 4, **dadurch gekennzeichnet, daß** Bestandteil des abnehmbaren Gehäuseabschnittes (31) ein Träger (34) für den Stator (35) des Antriebsmotors (5) ist und daß auch der Stator (35) im abnehmbaren Gehäuseabschnitt (31) untergebracht ist.

6. Pumpe nach einem der Ansprüche 1 bis 5, **dadurch gekennzeichnet, daß** sie einen zumindest teilweise aktiv magnetisch gelagerten Rotor umfaßt und daß die elektrische Versorgung (37) der Magnetlager im Pumpengehäuse (1) untergebracht ist.

## Claims

1. Turbo vacuum pump or molecular vacuum pump (21)
- having a housing (1),
- having a rotor (7) operated at high speed,
- having a drive motor (5) for the rotor (7),
- having a power circuit (22), in which electrical and electronic components for generating the current needed by the drive motor (5) are situated,
- having a control section (23) comprising modules for monitoring and controlling operating parameters of the pump,
- having a microprocessor, which is situated in the control section (23),
- having sensors (36) in the region of the vacuum pump (21) and/or of the drive motor (5), which are connected by signal lines (29) to the control section (23), and
- having a connection between power circuit (22) and control section (23), via which connection the power circuit (22) and hence operating parameters of the vacuum pump (21) are controlled in dependence upon signals of the sensors (36),
**characterized in**
- **that** power circuit (22) and control section (23) are accommodated in the housing (1) of the vacuum pump and
- **that** the power circuit (22) is so designed that power circuit (22) and hence the vacuum pump, for power supply purposes, is connectable merely by a cable (24) to a 220 V a.c. voltage system or a 24 V industrial standard power supply.

2. Pump according to claim 1, **characterized in that** an operating and display device (25), which is independent of the pump, is connected by a line (26) to the housing (1) of the vacuum pump (21).

3. Pump according to claim 1 or 2, **characterized in that** operating elements (27) and status displays (28) are accommodated in the housing (1) of the pump.

4. Pump according to one of the preceding claims, **characterized in that** a component part of the housing (1) of the vacuum pump (21) is a removable housing portion (31) and that in said housing portion power circuit (22) and control section (23) are accommodated.

5. Pump according to claim 4, **characterized in that** a component part of the removable housing portion (31) is a carrier (34) for the stator (35) of the drive motor (5) and that the stator (35) also is accommodated in the removable housing portion (31).

6. Pump according to one of claims 1 to 5, **characterized in that** it comprises an at least partially actively magnetically supported rotor and that the electric power supply (37) of the magnet bearings is accommodated in the pump housing (1).

## Revendications

1. Turbopompe à vide ou pompe à vide moléculaire (21), comportant
- un carter (1),
- un rotor (7) entraîné avec une vitesse élevée de rotation,
- un moteur d'entraînement (5) pour le rotor (7),
- une partie de puissance (22), dans laquelle sont disposés des composants électriques et électroniques pour la production du courant nécessaire pour le moteur d'entraînement (5),
- une partie de commande (23) comportant des modules pour surveiller et commander des paramètres de fonctionnement de la pompe,
- un microprocesseur, qui est situé dans la partie de commande (23),
- des capteurs (36) situés au voisinage de la pompe à vide (21) et/ou du moteur d'entraînement (5) et qui sont reliés à la partie de commande (23) par l'intermédiaire de lignes de transmission de signaux (29), et
- une liaison entre la partie de puissance (22) et la partie de commande (23), au moyen de laquelle la partie de puissance (22) et par conséquent les paramètres de fonctionnement de la pompe à vide (21) sont commandés en fonction de signaux des capteurs (36),
**caractérisée en ce**
- **que** la partie de puissance (22) et la partie de commande (23) sont logées dans le carter (1) de la pompe à vide, et
- **que** la partie de puissance (22) est agencée de telle sorte que la partie de puissance (22) et de ce fait la pompe à vide peuvent être reliées, pour l'alimentation en tension, uniquement par l'intermédiaire d'un câble (24) à un réseau à tension alternative à 220 V ou à une alimentation en tension standard industrielle à 24 V.

2. Pompe selon la revendication 1, **caractérisée en ce qu'**un appareil de manoeuvre et d'affichage (25), indépendant de la pompe, est relié au carter (1) de la pompe à vide (21) par une ligne (26).

3. Pompe selon la revendication 1 ou 2, **caractérisée en ce que** des éléments de manoeuvre (27) et des dispositifs d'affichage d'état (28) sont logés dans le carter (1) de la pompe.

4. Pompe selon l'une des revendications précédentes, **caractérisée en ce que** le composant du carter (1) de la pompe (21) est une partie amovible (31) du carter et que la partie de puissance (22) et la partie de commande (23) sont logées dans cette partie du carter.

5. Pompe selon la revendication 4, **caractérisée en ce que** le composant de la partie amovible (31) du carter est un support (34) pour le stator (35) du moteur d'entraînement (5) et que le stator (35) est également logé dans la partie amovible (31) du carter.

6. Pompe selon l'une des revendications 1 à 5, **caractérisée en ce qu'**elle comporte un rotor monté magnétiquement de manière à être au moins partiellement actif et que l'alimentation électrique (37) du support magnétique est logée dans le carter (1) de la pompe.
